# EUROPÄISCHE PATENTSCHRIFT

(11) **EP 2 329 749 B1**
(45) Veröffentlichungstag und Bekanntmachung des Hinweises auf die Patenterteilung: **22.10.2014**
(21) Anmeldenummer: 10192514.7
(22) Anmeldetag: 25.11.2010
(51) Int. Cl.: A47J 31/44

(54) **Kaffeemaschine**
Coffee machine
Machine à café

(30) Priorität: 01.12.2009 DE 202009015681 U
(43) Veröffentlichungstag der Anmeldung: 08.06.2011
(73) Patentinhaber: WIK Far East Ltd, North Point Hong Kong (CN)
(72) Erfinder: Meuer, Jens Martin, 47269 Duisburg (DE)
(74) Vertreter: Haverkamp, Jens

(56) Entgegenhaltungen:
- EP-A1- 0 659 378
- WO-A1-97/47376
- DE-U1-202008 008 257
- US-A- 3 084 613
- US-A- 5 803 312
- US-A1- 2007 031 558

## Beschreibung

Die Erfindung betrifft eine Kaffeemaschine mit einer Brüheinheit und wenigstens einem Auslauf zur Ausgabe von gebrühtem Kaffee und wenigstens einem zweiten Auslauf zur Ausgabe eines zweiten Getränkebestandteils und mit einer der wenigstens einen zweiten Auslauf beaufschlagenden Aufschäumeinrichtung, wobei die Ausläufe Teil eines gegenüber der Aufschäumeinrichtung und der Brüheinheit verstellbaren Auslaufmoduls sind.

Kaffeemaschinen als Getränkezubereitungsmaschinen verfügen, wenn diese als sogenannte Vollautomaten ausgeführt sind, über eine Brüheinheit, in die das für die Bereitung des Kaffeegetränks benötigte Kaffeemehl eingeführt wird. Der Auslauf der Brüheinheit ist an einen getränkemaschinenseitigen Auslauf angeschlossen. Dieser befindet sich oberhalb einer Trinkgefäßstellfläche, auf der zum Auffangen des aus dem Getränkeauslauf im Zuge der Bereitung eines Kaffeegetränks ausfließenden gebrühten Kaffees ein Trinkgefäß aufstellbar ist. Derartige Kaffeemaschinen können konzipiert sein, um Kaffee-Milch-Mischgetränke bereiten zu können. In einem solchen Fall verfügen diese neben einer Brüheinheit über eine Einrichtung zum Bereiten dieses weiteren Getränkebestandteils. Hierbei kann es sich beispielsweise um eine Milchaufschäumeinrichtung handeln. Mit einer derartigen Milchaufschäumeinrichtung wird unter Verwendung von in der Kaffeemaschine produziertem Heißdampf Milch aus einem Vorratsbehälter angesaugt, aufgeschäumt und über einen Auslauf ausgegeben. Neben Kaffeemaschinen, bei denen sich die Milchaufschäumeinrichtung bzw. der Auslauf derselben mit Abstand zu dem maschinenseitigen Auslauf der Brüheinheit befindet, sind auch Kaffeemaschinen bekannt geworden, bei denen sich der Milchauslauf im Bereich des zum Ausgeben des gebrühten Kaffees befindlichen Auslauf angeordnet sind. Beschrieben ist eine solche Einrichtung in DE 20 2006 002 124 U1. Bei dieser vorbekannten Heißgetränkezubereitungsmaschine befindet sich der Auslauf für den gebrühten Kaffee als erstem Getränkebestandteil und der Auslauf für einen Milchschaum als zweitem Getränkebestandteil in unmittelbarer Nachbarschaft zueinander, und zwar dergestalt, dass aus den paarweise angeordneten Ausläufen zum Ausgeben jeweils eines ersten und eines zweiten Getränkebestandteils in ein darunter positioniertes Trinkgefäß beide Getränkebestandteile ausgegeben werden können, ohne das Trinkgefäß umstellen zu müssen.

Aus EP 0 820 715 A1 ist eine Kaffeemaschine bekannt, bei der die beiden Ausläufe zu einer konstruktiven Einheit zusammengefasst sind, und zwar indem diese konzentrisch zueinander angeordnet sind. Dabei ist vorgesehen, dass aus dem innen liegenden Auslauf gebrühter Kaffee und durch den diesen umgebenden Ringspalt, gebildet durch das äußere Rohr, Milchschaum als weiterer Getränkebestandteil ausfließt. Teil dieses vorbekannten Auslaufmoduls ist eine Aufschäumeinrichtung, durch die, wenn dampfbeaufschlagt Milch angesaugt und in einer Emulgierkammer aufgeschäumt wird. Der Ausgang der Emulgierkammer mündet in den den inneren Auslauf umgebenden Ringspalt. Um ein Herausspritzen von Milchbestandteilen durch den Vorgang des Aufschäumens aus dem Auslauf zu unterdrücken oder zu vermeiden sind in diesem der Längserstreckung folgende Stege angeordnet. Dieses Auslaufmodul ist angeschlossen an eine Kaffeeauslaufleitung zum Heranführen des in der Brüheinheit gebrühten Kaffees und an eine Heißdampfzuführleitung. Teile des Auslaufmoduls können voneinander zu Reinigungszwecken getrennt werden.

Aufgrund der Bauart dieses Auslaufmoduls mit der darin integrierten Aufschäumeinrichtung benötigt diese eine gewissen Bautiefe und eignet sich nicht für Anwendungen, bei denen das Auslaufmodul Teil einer Tür oder Klappe sein soll, die gegenüber den übrigen Bestandteilen der Kaffeemaschine zum Öffnen und Schließen des Gehäuses verstellt oder verschwenkt werden soll.

Gemäß US 2007/0031558 A1 umfasst eine Einrichtung zur Ausgabe von Milch und/oder Milchschaum eine Emulgiervorrichtung, in die Wasserdampf einführbar ist, wodurch die durch die Emulgiervorrichtung geleitete Milch erwärmbar und/oder aufschäumbar ist. Wenn die Einrichtung zur Ausgabe von Milch und/oder Milchschaum in eine Kaffeemaschine integriert ist, umfasst die Kaffeemaschine eine Kaffeeausgabedüse, in welche die Ausgabedüsen zur Ausgabe von Milch und/oder Milchschaum münden. Die Kaffeemaschine kann eine frontseitige Tür aufweisen, die einen Ausgabebecher trägt, an dem die Kaffeeausgabedüse angebracht ist. Aus der gattungsfremden Patentschrift US 3,084,613 ist eine Vorrichtung zum Herstellen und Ausgeben eines Instant-Getränks bekannt, bei der eine absperrbare Ausgabeeinheit, die einen Auslauf zur Ausgabe des Instant-Getränks aufweist, mit einer Zubereitungseinheit verbunden ist. Durch Abnehmen eines abnehmbaren Gehäuseteils, das die Ausgabeeinheit trägt, wird die Zubereitungseinheit mit entnommen.

In WO 97/47376 ist ein Milchschäumapparat offenbart, bei dem in einer als Y-förmiges Verbindungsstück ausgebildeten Mischkammer Dampf aus einem Dampferzeuger und von einer Pumpe geförderte Milch gemischt werden, um eine Mischung von Milch und Dampf zu erzeugen.

Ausgehend von diesem diskutierten Stand der Technik liegt der Erfindung daher die Aufgabe zugrunde, eine Kaffeemaschine vorzuschlagen, die ein Auslaufmodul aufweist, welches nicht nur bezüglich seiner Tiefe flacher bauend ausgelegt werden kann, sondern welches sich ebenfalls dazu eignet, Teil einer Türe oder Klappe des Gehäuses zu sein.

Gelöst wird diese Aufgabe erfindungsgemäß durch eine Eingangs genannte, gattungsgemäße Kaffeemaschine, bei der der zumindest eine von der Aufschäumeinrichtung beaufschlagbare Auslauf an eine Leitung mit einem Kupplungsglied an ihrem freien Ende zum Andocken der Leitung an den Ausgang der Aufschäumeinrichtung angeschlossen ist und wobei in der Stellung des Auslaufmoduls zum Ausgeben eines Getränkes das Kupplungsglied an den Ausgang der Aufschäumeinrichtung angedockt gehalten ist, und dass der Auslauf der Brüheinheit mit seinem Ausgang dergestalt zu dem Auslaufmodul angeordnet ist, damit der daraus ausfließende Kaffee schwerkraft-bedingt in einen Kaffeesammler des Auslaufmoduls einläuft, an welchen Sammler der zumindest eine Kaffeeauslauf angeschlossen ist.

Bei dieser Kaffeemaschine ist das Auslaufmodul von der Aufschäumeinrichtung und der Brüheinheit getrennt. Zum Zuführen des gebrühten Kaffees und von beispielsweise aufgeschäumter Milch als weiteren Getränkebestandteil sind zwei Schnittstellen vorgesehen. Zum Zuführen des gebrühten Kaffees in das Auslaufmodul und zu dem darin befindlichen Auslauf verfügt dieses über einen Kaffeesammler. Dieser ist oberseitig offen und in der Stellung des Auslaufmoduls zum Ausgeben eines Getränks dergestalt angeordnet, dass sich der Sammler unterhalb des Ausganges des Auslaufes der Brüheinheit angeordnet ist, damit der daraus ausfließende Kaffee schwerkraftbedingt in den Sammler einfließen kann. Bei dem Ausgang der Brüheinheit kann es sich um den tatsächlichen Ausgang derselben handeln oder auch um den Ausgang einer Kaffeeauslaufleitung. Somit bildet die Anordnung, umfassend den Ausgang der Brüheinheit in vertikaler Richtung oberhalb des Sammlers und das dadurch bedingte schwerkraftbedingte Einfließen des Kaffees in den Sammler die eine Schnittstelle aus. Zum Anschließen des oder der Ausläufe des Auslaufmoduls zur Ausgabe des weiteren Getränkebestandteils, insbesondere zum Ausgeben von aufgeschäumter Milch ist vorgesehen, dass der zumindest eine diesbezügliche Auslauf des Auslaufmoduls an eine Leitung angeschlossen ist, die an ihrem freien Ende ein Kupplungsglied trägt. Dieses ist zum Andocken an den Ausgang der Aufschäumeinrichtung konzipiert. Diese Leitung mit ihrem Kupplungsglied ist Teil des Auslaufmoduls. Da das Kupplungsglied konzipiert ist, um an dem Ausgang der Aufschäumeinrichtung in einer angedockten Stellung gehalten zu sein, wenn sich das Auslaufmodul in seiner Stellung zum Ausgeben eines Getränkes befindet, und ein Andocken allein durch Heranführen des Kupplungsgliedes an den Ausgang der Milchaufschäumeinrichtung herbeigeführt wird, kann diese auch ohne weiteres von der Aufschäumeinrichtung getrennt werden. Zum Ausgeben eines Getränkes liegt das Kupplungsglied vorzugsweise unter Vorspannung stehend an dem Ausgang der Aufschäumeinrichtung an. Die Vorspannung dient dem Zweck, dass das Kupplungsglied abgedichtet an dem Ausgang der Aufschäumeinrichtung anliegt. Daher braucht die Kraft der Vorspannung nicht sonderlich hoch zu sein. Ergänzend oder auch anstelle zu einem Anschluss des Kupplungsgliedes an den Ausgang der Aufschäumeinrichtung durch Vorspannung ist ein Anschluss auch mit einem Formschluss möglich. Das Kupplungslied einerseits und der Ausgang der Aufschäumeinrichtung andererseits bilden somit die zweite Schnittstelle zwischen dem Auslaufmodul und den übrigen Bestandteilen der Kaffeemaschine. Durch Vorsehen dieser Schnittstellen befindet sich die Aufschäumeinrichtung selbst innerhalb des Gehäuses der Kaffeemaschine. Mithin kann das Auslaufmodul in seiner Tiefe schlank bauend konzipiert werden und in Folge der vorgeschriebenen Schnittstellen ohne weiteres gegenüber der Aufschäumeinrichtung und der Brüheinheit sowie den übrigen Bestandteilen der Kaffeemaschine verstellt, beispielsweise als Teil einer Tür von diesen Elementen weggeschwenkt werden.

Die vorbeschriebene Konzeption bedingt, dass zwischen dem Ausgang der Aufschäumeinrichtung, also dem Ausgang der Emulgierkammer der Aufschäumeinrichtung und dem zumindest einen anschließbaren Auslauf eine Leitung vorhanden sein muss, durch die aufgeschäumte Milch bis zum Auslauf fließen muss. Aufgrund des Abstandes des ausgabeseitigen Endes des Milchschaumauslaufes des Auslaufmoduls von der Emulgierkammer brauchen grundsätzlich keine weiteren Vorkehrungen getroffen zu werden, um ein unerwünschtes Ausspritzen aufgeschäumter Milch zu vermeiden. Vielmehr bewirkt diese Leitung, dass durch diese transportierter Milchschaum auslaufseitig sehr gleichmäßig ausfließt. Zudem wurde beobachtet, dass bei dieser Konzeption der ausfließende Milchschaum besonders feinporig ist.

Die beiden Ausläufe können zu einer konstruktiven Einheit zusammengefasst, beispielsweise konzentrisch zueinander angeordnet sein. Bei einer solchen Ausgestaltung ist vorgesehen, dass der innen liegende Auslauf an die Aufschäumeinrichtung über die Leitung mit dem Kupplungsglied an ihrem freien Ende anschließbar ist und durch den diesen Auslauf umgebenden Ringspalt bzw. den außen liegenden Auslauf der gebrühte Kaffee ausfließt. Bei dieser Ausgestaltung fließt an der Außenwand des inneren Auslaufes der gebrühte Kaffee, so dass das ausgabeseitige Ende des inneren Auslaufes auf diese Weise von Milchresten befreit wird, bzw. diese sich daran erst gar nicht anlagern. Die beiden Ausläufe einer solchen Auslaufeinheit können auch nach Art eines Doppelrohres nebeneinander liegenden angeordnet sein.

Nachfolgend ist die Erfindung anhand von Ausführungsbeispielen unter Bezugnahme auf die beigefügten Figuren beschrieben. Es zeigen:
- **Fig. 1**:: Eine perspektivische Ansicht einer Kaffeemaschine mit einem Auslaufmodul,
- **Fig. 2**:: einen Längsschnitt durch einen Ausschnitt der Kaffeemaschine der Figur 1 entlang einer ersten Ebene,
- **Fig. 3**:: einen vergrößerten Ausschnitt von Teilen des Schnittes der Kaffeemaschine der Figur 2,
- **Fig. 4**:: ein Längsschnitt durch einen Ausschnitt der Kaffeemaschine der Figur 1 entlang einer zu der ersten Ebene parallel versetzten Ebene,
- **Fig. 5**:: das Auslaufmodul der Kaffeemaschine der Figur 1 ohne die Kaffeemaschine als solche in einer perspektivischen Ansicht von unten,
- **Fig. 6**:: das Auslaufmodul der Figur 5 in einer perspektivischen Ansicht von oben auf die Rückseite derselben,
- **Fig. 7**:: eine perspektivische Ansicht auf das Auslaufmodul einer im Übrigen nicht näher dargestellten weiteren Kaffeemaschine,
- **Fig. 8**:: einen Längsschnitt durch das Auslaufmodul der Figur 7 und
- **Fig. 9**:: einen Schnitt durch das Auslaufmodul der Figuren 7 und 8.

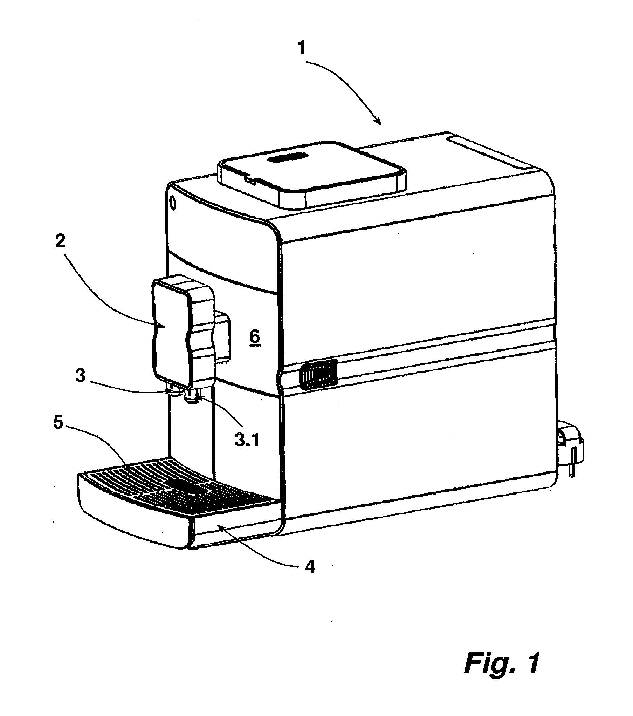

Eine Kaffeemaschine 1 ist als Vollautomat konzipiert. An der Frontseite der Kaffeemaschine 1 befindet sich ein Auslaufmodul 2, welches bei dem dargestellten Ausführungsbeispiel über zwei Doppelausläufe 3, 3.1 verfügt, die im Einzelnen nachstehend beschrieben sind. Unterhalb des Auslaufmoduls 2 befindet sich ein Tropfensammelbehälter 4, der oberseitig durch ein Gitter 5 abgedeckt ist. Das Auslaufmodul 2 ist angeschlossen an eine Tür 6 des Gehäuses der Kaffeemaschine 1. Die Tür 6 ist um eine im Bereich der in Figur 1 erkennbaren rechten Kante derselben verlaufende vertikale Schwenkachse aufschwenkbar. In der in Figur 1 gezeigten Geschlossenstellung der Tür 6 ist diese verrastet oder verriegelt gehalten. Die in Figur 1 gezeigte Stellung der Tür mit dem Auslaufmodul 2 zeigt die Stellung des Auslaufmoduls 2 bei einer Getränkebereitung.

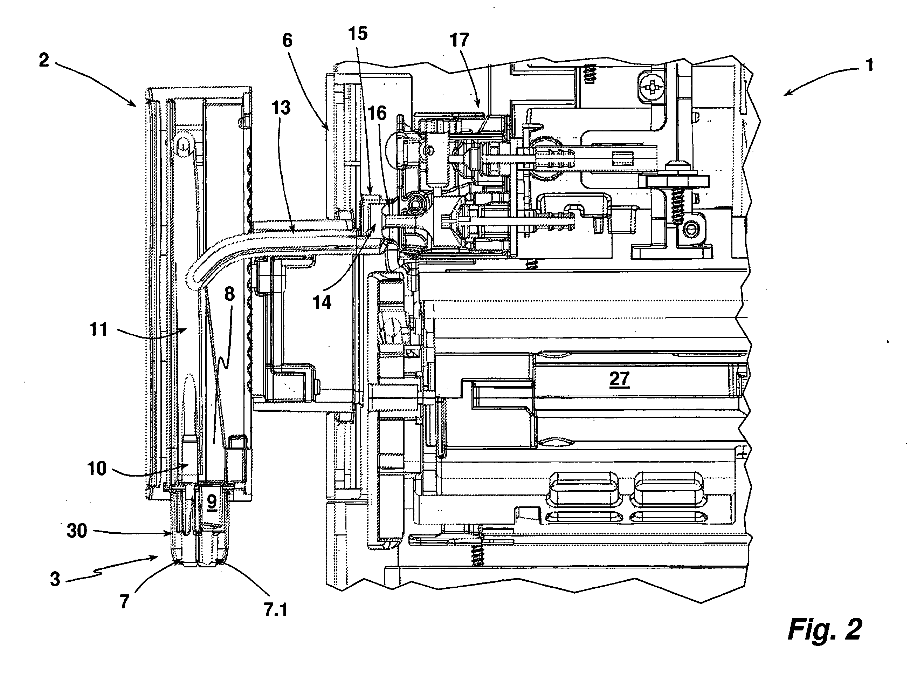

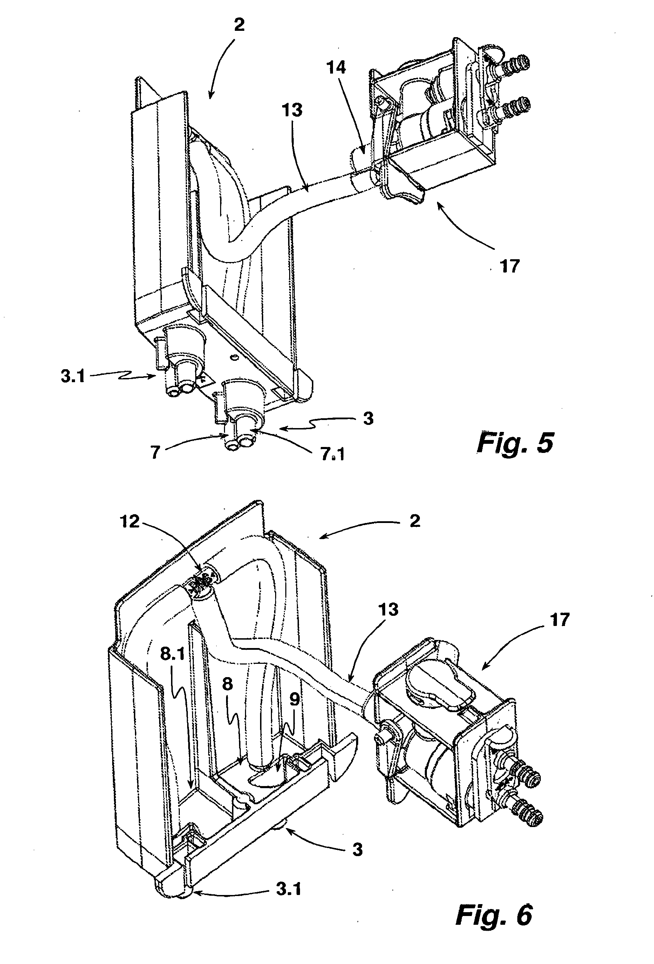

Figur 2 zeigt in einem Ausschnitt eines Längsschnittes einen Einblick in einen Teil des Inneren der Kaffeemaschine 1 sowie des an die Tür 6 angeschlossenen Auslaufmoduls 6. Die Schnittebene befindet sich im Bereich des Doppelauslaufes 3. Bei der Kaffeemaschine 1 sind die Doppelausläufe 3, 3.1, wie aus Figur 2 erkennbar, als konstruktive Einheit in Form nebeneinander liegender Ausläufe 7, 7.1 ausgeführt, und zwar nach Art eines Doppelrohres, bei dem die einzelnen Rohre aneinander angeformt sind. Der Auslauf 7.1 bildet den Ausgang eines nach oben hin offenen Kaffeesammlers 8, der bei dem dargestellten Ausführungsbeispiel zum Auslauf 7.1 hin eine stufenartige Vertiefung 9 aufweist. Benachbart zu der Vertiefung 9 befindet sich ein Schlauchanschlussstutzen 10, auf den ein Silikonschlauch 11 aufgesteckt ist. In gleicher Weise ist auf den entsprechenden Anschlussstutzen des Doppelauslaufes 3.1 ein Silikonschlauch aufgesetzt. Die beiden Silikonschläuche 11 sind, wie aus Figur 6 erkennbar, über ein T-Stück 12 an eine gemeinsame Zuführleitung 13 angeschlossen. Die Zuführleitung 13 trägt an ihrem freien Ende ein topfartiges Kupplungsglied 14, welches an der Leitung 13 angeformt ist und daher aus demselben Material wie die Leitung 13 besteht. Bei dem dargestellten Ausführungsbeispiel sind die Leitung 13 und das Kupplungsglied aus einem Silikonmaterial hergestellt. Das Kupplungsglied 14 ist in einer Halterung 15 der Tür 6 gehalten. Die Halterung 15 umgreift den oberen Teil des Kupplungsgliedes 14 nach Art einer Spange. Einführbar ist das Kupplungsglied 14 in die Halterung 15 unter Ausnutzung der elastischen Eigenschaften des Kupplungsgliedes 14. Dadurch dass das Kupplungsglied 14 in der Halterung 15 der Tür 6 gehalten ist, wird dies bei einem Verschwenken der Tür 6, etwa zum Aufschwenken derselben aus ihrer in Figur 1 und 2 gezeigten Stellung zusammen mit dem Auslaufmodul 2 mitbewegt. Das Kupplungsglied 14 stützt sich rückseitig an einer Wand als Widerlager ab, um den bei dem dargestellten Ausführungsbeispiel notwendigen Anpressdruck (Vorspannung) in der Andockstellung für einen abgedichteten Anschluss bereitzustellen.

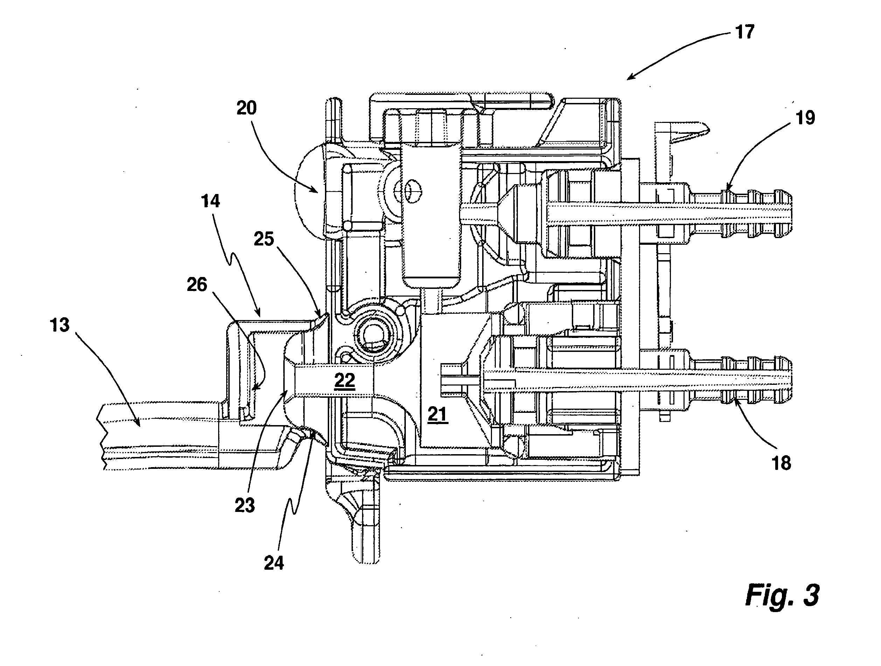

Das Kupplungsglied 14 und der Anschluss des Kupplungsglieds 14 in der in Figur 2 gezeigten Stellung des Auslaufmoduls ist in der Darstellung der Figur 3 besser erkennbar. In der in Figur 2 gezeigten Stellung ist das Kupplungsglied 14 angedockt an den Ausgang 16 einer Aufschäumeinrichtung 17. In Figur 3 ist die Aufschäumeinrichtung 17 aus der Kaffeemaschine 1 herausgenommen mit dem daran angeschlossenen Kupplungsglied 14 gezeigt. Die Aufschäumeinrichtung 17 verfügt an der ihrem Ausgang 16 gegenüberliegenden Seite über zwei Schlauchstutzen 18, 19. Über den Schlauchstutzen 18 und einen daran angeschlossenen Schlauch ist die Aufschäumeinrichtung 17 mit Heißdampf beaufschlagbar. Über den Schlauchstutzen 19 und einen daran angeschlossenen Schlauch kann Luft in die Aufschäumeinrichtung 17 für den Prozess des Aufschäumens (Emulgierens) von Milch eingebracht werden. Ein Milchzuführkanal ist in der Schnittdarstellung der Figur 3 mit dem Bezugszeichen 20 kennzeichnet. Der Milchzufuhrkanal 20 ist zur Vorderseite der Aufschäumeinrichtung 17 hin weisend angeordnet, damit vorderseitig durch eine Öffnung der Kaffeemaschine 1 ein Milchschlauch eingeführt und in den Milchzufuhrkanal 20 eingeschoben werden kann.

Die Aufschäumeinrichtung 17 arbeitet nach dem an sich bekannten Venturiprinzip, bei dem die Milch über eine in den Milchzuführkanal 20 eingelegten Milchzufuhrschlauch bei Beaufschlagung der Emulgierkammer 21 mit Heißdampf in die Emulgierkammer 21 eingezogen und darin emulgiert wird. Die emulgierte Milch tritt durch einen Ausgangskanal 22 aus der Emulgierkammer 21 aus. Im Bereich der Mündung 23 des Ausgangskanals 22 befindet sich der Ausgang 16 der Aufschäumeinrichtung 17. Dessen äußere Mantelfläche 24 ist, wie aus Figur 3 erkennbar, im Längsschnitt S-förmig geschwungen und zur Mündung 23 hin verjüngt. Die solchermaßen konzipierte Mantelfläche 24 dient dem topfförmigen Kupplungsglied 14 als Andockfläche, an der das Kupplungsglied 14 abgedichtet angedockt werden kann. In Figur 3 ist die angedockte Stellung des Kupplungsgliedes 14 an den Ausgang 16 der Aufschäumeinrichtung 17 gezeigt. Gehalten ist das Kupplungsglied 14 in dieser Stellung durch die an der Tür 6 befestigte Halterung 15 (beides in Figur 3 nicht dargestellt).

Das topfförmige Kupplungsglied 14 verfügt an seinem freien Ende über einen lippenförmigen Kragen 25, dessen Materialstärke zum freien Ende desselben hin ausdünnt. Durch diese Maßnahme ist der Kragen 25 weichelastischer als die übrigen Abschnitte des Kupplungsgliedes 14, weshalb sich dieser besonders gut an die Mantelfläche 24, insbesondere an deren rückwärtigen Abschlussbereich anschmiegen kann. In der in Figur 2 und 3 gezeigten Stellung, in der das Kupplungsglied 14 an dem Ausgang 16 der Aufschäumeinrichtung 17 angedockt ist, wirkt das Kupplungsglied 14 unter Vorspannung stehend gegen die Mantelfläche 24. Entsprechend bemessen ist in der Geschlossenstellung der Tür 6 der Abstand zwischen der spangenartigen Halterung 15 und dem darin gehaltenen Kupplungsglied 14, welches zum Zwecke der Vorspannung in axialer Richtung aus der Halterung 15 in Richtung zur Aufschäumeinrichtung 17 herausragt.

Die Zuführleitung 13 ist außermittig an das Kupplungsglied 14 angeformt. Damit dient der Boden 26 des Kupplungsgliedes 14 als Prallplatte für aus dem Ausgangskanal 22 ausströmende, aufgeschäumte Milch. Durch diese Maßnahme wird ein Einfließen von aufgeschäumter Milch in die Leitung 13 und dementsprechend ein Ausfließen der aufgeschäumten Milch aus den Ausläufen 7 verbessert und ein Ausspritzen wirksam vermieden.

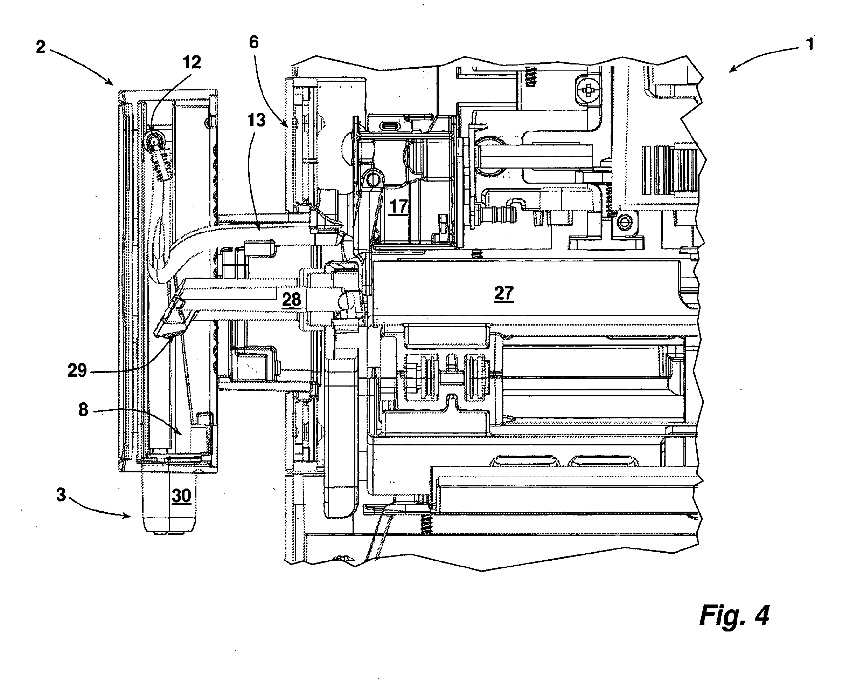

Aus der Schnittdarstellung der Figur 4, deren Schnittebene sich zwischen den Doppelausläufen 3, 3.1 befindet, ist die Brüheinheit 27 der Kaffeemaschine mit ihrem Auslauf 28 erkennbar. Der Auslauf 28 ragt über den vorderen Abschluss der eigentlichen Kaffeemaschine 1 hinaus in das Innere des Auslaufmoduls 2. Die Mündung 29 dieses Auslaufes 28 befindet sich vertikal oberhalb des Sammlers 8, sodass in der Stellung des Auslaufmoduls 2, wie in Figur 4 gezeigt, daraus ausfließender gebrühter Kaffee schwerkraftbedingt in den Sammler 8 bzw. die Sammler 8.1 einfließt. Der Auslauf der Brüheinheit 27 ist geteilt, sodass ein Abschnitt oberhalb des Sammlers 8 und der andere Abschnitt oberhalb des Sammlers 8.1 angeordnet ist.

Die Konzeption der Schnittstellen zwischen dem Auslauf 28 der Brüheinheit 27 und den Sammlern 8, 8.1 des Auslaufmoduls 2 sowie der Schnittstelle zwischen der Zuführleitung 13 mit ihrem Kupplungsglied 14 dem Auslaufmodul 2 zugehörig und der Aufschäumeinrichtung 17 machen deutlich, dass das Auslaufmodul 2 ohne weiteres gegenüber den übrigen Bestandteilen der Kaffeemaschine 1 und damit insbesondere gegenüber der Aufschäumeinrichtung 17 und der Brüheinheit 27 verstellt, vor allem verschwenkt werden kann. Dieses ist erforderlich, um die Aufschäumeinrichtung 17 aus der Kaffeemaschine 1 herausnehmen und reinigen zu können. Gleiches gilt für die Brüheinheit 27. Anstelle einer Verschwenkbarkeit der Türe 6, wie in dem Ausführungsbeispiel gezeigt, kann diese auch konzipiert sein, um von der Kaffeemaschine abgenommen werden zu können.

Figur 5 zeigt das Auslaufmodul 2 in einer perspektivischen Ansicht von unten ohne das in Figur 4 erkennbare, die Ausläufe 7, 7.1 einfassende Designrohr 30. In Figur 6 ist die Ausbildung der Sammler 8, 8.1 des Auslaufmoduls 2 erkennbar.

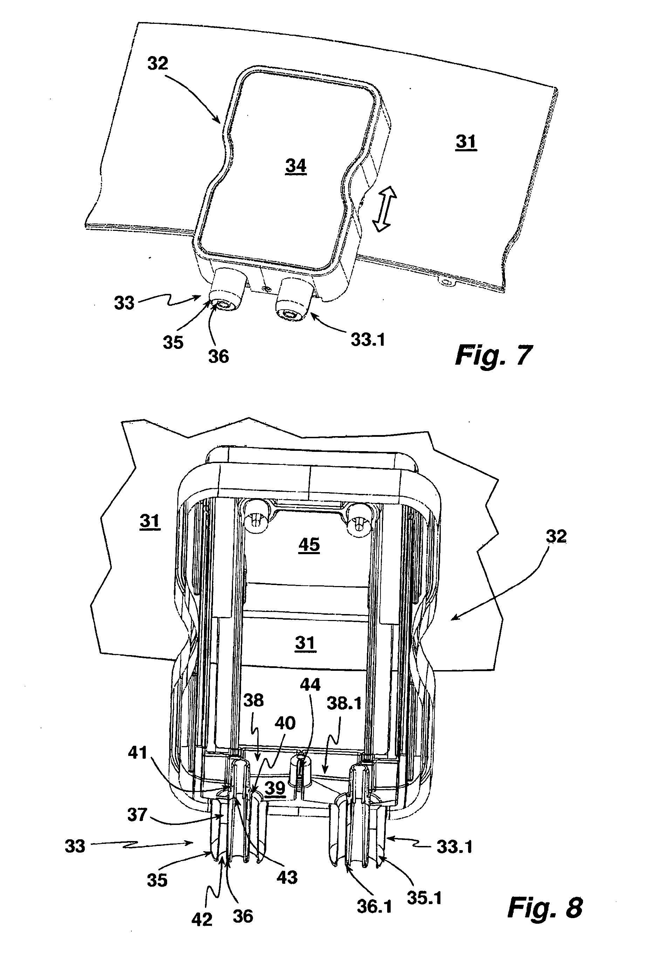

Figur 7 zeigt in einem weiteren Ausführungsbeispiel schematisiert ein Frontteil 31 eines im Übrigen nicht näher dargestellten Gehäuses einer Kaffeemaschine. Mechanisch an das Frontteil 31 ist ein Getränkemaschinenauslauf 32 angeschlossen. Der Getränkeauslauf 32 - das Auslaufmodul - ist, wie durch den Doppelpfeil in Figur 1 angedeutet, gegenüber dem Frontteil 31 einrichtbar. Diese Einrichtbarkeit dient zum Einrichten des Abstandes des Getränkeauslaufes 32 von einer unterhalb des Auslaufes 32 befindlichen Trinkgefäßabstellfläche der Kaffeemaschine. Der Getränkeauslauf 32 ist als Doppelauslauf zum gleichzeitigen Befüllen von zwei Trinkgefäßen konzipiert. Aus diesem Grunde verfügt der Getränkeauslauf 32 über zwei gleichartig konzipierte Ausläufe 33, 33.1. Diese sind bei dem dargestellten Ausführungsbeispiel aus einer den Getränkeauslauf sichtseitig verblendenden Abdeckung 34 mit ihren ausgabeseitigen Enden herausragend angeordnet. Das Frontteil 31 ist ebenso wie die Tür 6 des Ausführungsbeispiels 1 bis 6 gegenüber den übrigen Bestandteilen der Kaffeemaschine verschwenkbar.

Im Folgenden ist der Auslauf 33 näher beschrieben. Der Auslauf 33.1 ist entsprechend konzipiert.

Wie aus Figur 7 erkennbar, ist der Auslauf 33 als Doppelrohr konzipiert, und zwar gebildet durch ein äußeres Auslaufrohr 35 und ein konzentrisch zu diesem angeordneten innen liegenden inneren Auslaufrohr 36. Der Auslauf 33 ist konzipiert, damit aus beiden Auslaufrohren 35, 36 unterschiedliche Getränkebestandteile ausgegeben werden können.

Das innere Auslaufrohr 36 ist, wie aus Figur 8 erkennbar, durch mehrere radial von der Außenwand des Auslaufrohres 36 abragenden Speichen 37 mit der Innenwand des äußeren Auslaufrohres 35 verbunden und dadurch gehalten. Bei dem dargestellten Ausführungsbeispiel befinden sich die Speichen 37 im eingangsseitigen Mündungsbereich des äußeren Auslaufrohres 35. Das äußere Auslaufrohr 35 ist an einen Sammler 38 angeformt. Der Sammler 38 bildet ein Auffanggefäß zum Auffangen des durch das äußere Auslaufrohr 35 auszugebenden Getränkebestandteils. Der Boden 39 des Sammlers 38 ist in Richtung zu der Mündung 40 des äußeren Rohrs 35 hin mit einem Gefälle konzipiert, damit der darin eingebrachte Getränkebestandteil rückstandsfrei aus dem Sammler 38 durch das Auslaufrohr 35 ausfließt. Zu diesem Zweck kann der Sammler 38 mit einer ein Ausfließen begünstigenden Beschichtung ausgekleidet sein.

Eingreifend in das äußere Auslaufrohr 35 ist das innere Auslaufrohr 36 angeordnet, wobei dieses über den Boden 39 des Sammlers 38 hinaus zum Bereitstellen eines Schlauchanschlussabschnittes 41 weitergeführt ist. Der Schlauchanschlussabschnitt 41 dient zum Aufsetzen eines Schlauchabschnitts zum Anschließen des Auslaufrohres 36 an eine Milchaufschäumeinrichtung. Damit dient das Auslaufrohr 36 zum Ausgeben von Milchschaum, während das Auslaufrohr 35 zum Ausgeben von gebrühtem Kaffee dient.

Wie aus Figur 8 erkennbar, ist bei dem dargestellten Ausführungsbeispiel die äußere Mantelfläche des inneren Auslaufrohres 36 zylindrisch, während die innere Mantelfläche des äußeren Auslaufrohres 35 eine gewisse Konizität aufweist mit der Folge dergestalt, dass die Weite des zwischen den beiden Rohren 35, 36 befindlichen Ringspaltes 42 von dem Bereich der Mündung 40 zum ausgabeseitigen Ende hin zunimmt. Hierdurch ist ein druckloses Auslaufen des in den Sammler 38 eingebrachten Getränkebestandteils verbessert. Das innere Auslaufrohr 36 ist in seinem ausgabeseitigen Abschnitt ebenfalls konisch konzipiert, und zwar mit einem sich zu seinem ausgabeseitigen Ende hin vergrößernden Durchmesser. Der Bereich des Schlauchanschlussabschnittes 41 ist entgegengesetzt konisch konzipiert. Die beiden gegeneinander laufenden konischen Abschnitte bilden innerhalb des Auslaufrohrs 36 einen zum ausgabeseitigen Ende des Auslaufrohrs 36 hin sprungartig die freie Querschnittsfläche vergrößernden Absatz 43 aus. Dieser Absatz 43 dient dem Zweck, dass der an das Auslaufrohr 36 geförderte Milchschaum die Möglichkeit hat, sich plötzlich (auf kurzer Strecke) zu entspannen, bevor der Milchschaum aus dem Auslaufrohr 36 austritt, womit eine besondere Milchschaumqualität erreicht wird.

Ein Absatz entsprechend des Absatzes 33 dieses Ausführungsbeispiels ist ebenfalls in dem Milchschaumauslauf 7 des Ausführungsbeispiels der Figuren 1 bis 6 vorhanden.

Da bei dem dargestellten Ausführungsbeispiel der Getränkeauslauf 32 als Doppelauslauf konzipiert ist, ist der Sammler 38 ebenfalls als Doppelsammler konzipiert, der durch eine Trennwand 44, durch die der Sammler 38 als erster Sammlerabschnitt von einem weiteren Sammlerabschnitt, dem Sammlerabschnitt 38.1 für den weiteren Auslauf des Doppelauslaufes getrennt ist. Zum Zuführen von Milchschaum an die beiden inneren Auslaufrohre 36, 36.1 der beiden Ausläufe 33, 33.1, ist auf jeden Schlauchanschlussabschnitt ein Schlauchabschnitt aufgesteckt, welche Schlauchanschlüsse über ein Y-Stück zusammengeführt und an die Milchaufschäumeinrichtung angeschlossen sind.

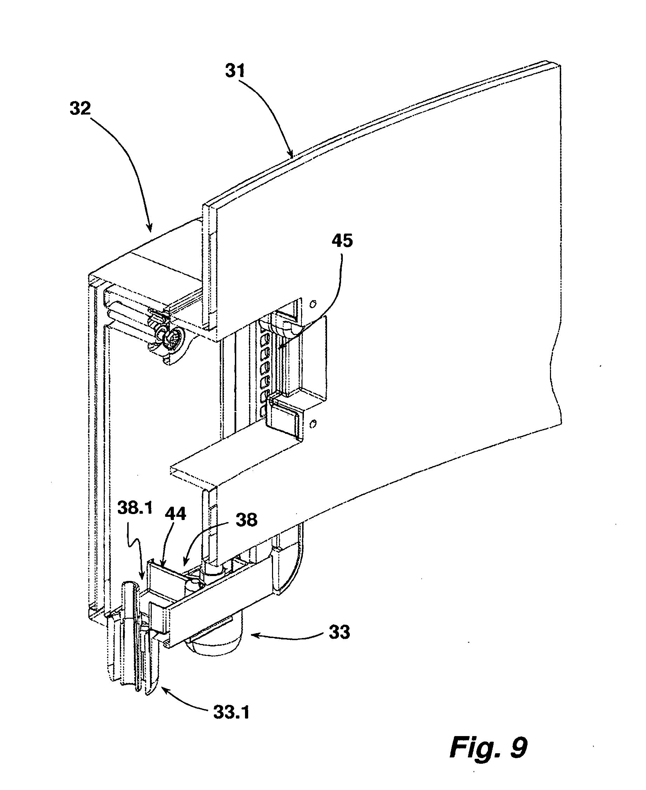

Das Frontteil 31 weist eine Durchbrechung 45 auf, durch die der Auslauf einer der Kaffeemaschine zugeordneten Brüheinheit hindurch ragt, damit das in der Brüheinheit gebrühte Kaffeegetränk aus dem Auslauf der Brüheinheit aus- und in die beiden Sammlerabschnitte 38, 38.1 des Doppelsammlers einfließen kann. Die Durchbrechung 45 des Frontteils 31 ist in der perspektivischen, geschnittenen Rückansicht auf das Frontteil 31 der Figur 9 erkennbar. Durch diese Durchbrechung 45 ist ebenfalls die Anschlussleitung zum Anschließen der beiden inneren Auslaufrohre 36, 36.1 an die Milchaufschäumeinrichtung hindurchgeführt.

Bei einer Getränkeausgabe kann aus den beiden Auslaufrohren 35, 36 eines Auslaufes 33 bzw. 33.1 gleichzeitig oder auch zeitlich versetzt zueinander der jeweilige Getränkebestandteil ausgegeben werden. Dieses erfolgt in Abhängigkeit von dem gewünschten Mischgetränk. Bei dem dargestellten Ausführungsbeispiel befindet sich der ausgabeseitige Abschluss des jeweils inneren Auslaufrohres 36, 36.1 innerhalb der Mündung des äußeren Auslaufrohres 35 bzw. 35.1. Dadurch ist gewährleistet, dass bei einer gleichzeitigen Ausgabe von Milchschaum und Kaffeegetränk oder bei einem Betrieb der Kaffeemaschine, bei dem zunächst der Milchschaum und anschließend das Kaffeegetränk ausgegeben wird, die Außenseite des jeweils innen liegenden Auslaufrohres 36, 36.1 durch das an der äußeren Mantelfläche des inneren Auslaufrohres 36, 36.1 ausfließende Kaffeegetränk von daran anhaftenden Milchschaumresten befreit oder diese daran erst gar nicht erst zur Anlagerung gelangen.

Die Erfindung ist anhand von Ausführungsbeispielen beschrieben worden, bei dem die beiden ineinander eingreifenden Ausläufe als konzentrische Doppelrohrausläufe ausgeführt sind. Gleichfalls ist es möglich, die beiden Ausläufe exzentrisch zueinander anzuordnen. Überdies ergeben sich für einen Fachmann, ohne den Umfang der Ansprüche zu verlassen, weitere Ausgestaltungsmöglichkeiten, die Erfindung zu realisieren, ohne dass dieses im Einzelnen dargelegt werden müsste.

### Bezugszeichenliste

- 1: Kaffeemaschine
- 2: Auslaufmodul
- 3, 3.1: Doppelauslauf
- 4: Sammelbehälter
- 5: Gitter
- 6: Tür
- 7, 7.1: Auslauf
- 8: Sammler
- 9: Vertiefung
- 10: Anschlussstutzen
- 11: Schlauch
- 12: T-Stück
- 13: Zuführleitung
- 14: Kupplungsglied
- 15: Halterung
- 16: Ausgang
- 17: Aufschäumeinrichtung
- 18: Schlauchstutzen
- 19: Schlauchstutzen
- 20: Milchzuführkanal
- 21: Emulgierkammer
- 22: Ausgangskanal
- 23: Mündung
- 24: Mantelfläche
- 25: Kragen
- 26: Boden
- 27: Brüheinheit
- 28: Auslauf
- 29: Mündung
- 30: Designrohr
- 31: Frontteil
- 32: Getränkeauslauf
- 33, 33.1: Auslauf
- 34: Abdeckung
- 35, 35.1: äußeres Auslaufrohr
- 36, 36.1: inneres Auslaufrohr
- 37: Speicher
- 38, 38.1: Sammler, Sammlerabschnitt
- 39: Boden
- 40: Mündung
- 41: Schlauchanschlussabschnitt
- 42: Ringspalt
- 43: Absatz
- 44: Trennwand
- 45: Durchbrechung

## Patentansprüche

1. Kaffeemaschine mit einer Brüheinheit und wenigstens einem Auslauf (7; 35, 35.1) zur Ausgabe von gebrühtem Kaffee und wenigstens einem zweiten Auslauf (7.1; 36, 36.1) zur Ausgabe eines zweiten Getränkebestandteils und mit einer den wenigstens einen zweiten Auslauf (7.1; 36, 36.1) beaufschlagenden Aufschäumeinrichtung (17), wobei die Ausläufe (7, 7.1; 35, 35.1, 36, 36.1) Teil eines gegenüber der Aufschäumeinrichtung (17) und der Brüheinheit (27) verstellbaren Auslaufmoduls (2) sind, **dadurch gekennzeichnet, dass** der zumindest eine von der Aufschäumeinrichtung (17) beaufschlagbare Auslauf (7.1; 36, 36.1) an eine Leitung (13) mit einem Kupplungsglied (14) an ihrem freien Ende zum Andocken der Leitung (13) an den Ausgang (16) der Aufschäumeinrichtung (17) angeschlossen ist und wobei in der Stellung des Auslaufmoduls (2) zum Ausgeben eines Getränkes das Kupplungsglied (14) an den Ausgang (16) der Aufschäumeinrichtung (17) angedockt gehalten ist, und dass der Auslauf (28) der Brüheinheit (27) mit seinem Ausgang (29) dergestalt zu dem Auslaufmodul (2) angeordnet ist, damit der daraus ausfließende Kaffee schwerkraftbedingt in einen Kaffeesammler (8, 8.1; 38, 38.1) des Auslaufmoduls (2) einläuft, an welchen Sammler (8, 8.1; 38, 38.1) der zumindest eine Kaffeeauslauf (7; 35, 35.1) angeschlossen ist.

2. Kaffeemaschine nach Anspruch 1, **dadurch gekennzeichnet, dass** in der Stellung des Auslaufmoduls zum Ausgeben eines Getränks das Kupplungsglied in Folge elastischer Rückstellkräfte einer das Kupplungsglied tragenden flexiblen Leitung unter Vorspannung stehend an den Ausgang der Aufschäumeinrichtung angedockt gehalten ist.

3. Kaffeemaschine nach Anspruch 1, **dadurch gekennzeichnet, dass** das Kupplungsglied (14) in einer Halterung (15) eines dem Auslaufmodul (2) zugeordneten Bauteils, beispielsweise einer Tür (6) gehalten ist und die Halterung (15) das Widerlager zum Bereitstellen der für das abgedichtete Andocken des Kupplungsgliedes (14) an den Ausgang (16) der Aufschäumeinrichtung (17) bildet.

4. Kaffeemaschine nach Anspruch 3, **dadurch gekennzeichnet, dass** das Kupplungsglied (14) in seiner an den Ausgang (16) der Aufschäumeinrichtung (17) angedockten Stellung unter einer gewissen Vorspannung stehend an der Mantelfläche (24) des Ausganges (16) anliegt.

5. Kaffeemaschine nach einem der Ansprüche 1 bis 4, **dadurch gekennzeichnet, dass** der Ausgang (16) der Aufschäumeinrichtung (17) über eine im Längsschnitt S-förmig geschwungene, einen Auslaufkanal (22) einfassende Andockfläche (24) verfügt, an der in der angedockten Stellung des Kupplungsgliedes (14) der Leitung (13) dieses mit seiner komplementären Andockfläche anliegt.

6. Kaffeemaschine nach Anspruch 5, **dadurch gekennzeichnet, dass** das Kupplungsglied (14) topfförmig und die Andockfläche desselben als lippenförmiger Kragen (25) ausgeführt sind.

7. Kaffeemaschine nach Anspruch 6, **dadurch gekennzeichnet, dass** die Materialstärke des Kragens (25) zu seinem äußeren Abschluss hin abnimmt.

8. Kaffeemaschine nach einem der Ansprüche 1 bis 7, **dadurch gekennzeichnet, dass** die Leitung (13) ein Silikonschlauch ist, an den das Kupplungsglied (14) angeformt ist.

9. Kaffeemaschine nach Anspruch 8, **dadurch gekennzeichnet, dass** die Leitung (13) außermittig an das topfförmige Kupplungsglied (14) angeschlossen ist.

10. Kaffeemaschine nach einem der Ansprüche 1 bis 9, **dadurch gekennzeichnet, dass** das Auslaufmodul (2) Teil einer Tür (6) des Gehäuses der Kaffeemaschine (1) ist.

11. Kaffeemaschine nach Anspruch 10, **dadurch gekennzeichnet, dass** die Tür (6) um eine vertikale Schwenkachse von ihrer Geschlossenstellung in ihre Offenstellung und umgekehrt verstellbar ist.

12. Kaffeemaschine nach Anspruch 11, **dadurch gekennzeichnet, dass** die Tür (6) in ihrer Geschlossenstellung, die die Stellung des Auslaufmoduls (2) zum Ausgeben eines Getränks darstellt, durch ein Schließmittel, beispielsweise einem Magneten oder eine auf Druckwechsel schließender und öffnender Riegelverschluss gehalten ist.

## Claims

1. Coffee machine with a brewing unit and at least one outlet (7; 35, 35.1) for dispensing brewed coffee and at least one second outlet (7.1; 36, 36.1) for dispensing a second drink component and with a foaming device (17) loading the at least one second outlet (7.1; 36, 36.1), wherein the outlets (7, 7.1; 35, 35.1, 36, 36.1) are part of a outlet module (2) which can be adjusted relative to the foaming device (17) and the brewing unit (27), **characterised in that** the at least one outlet (7.1; 36, 36.1) which can be loaded by the foaming device (17) is connected to a supply line (13) with a coupling element (14) at its free end for docking the supply line (13) on the outlet (16) of the foaming device (17) and wherein the coupling element (14) is held in a docking manner at the outlet (16) of the foaming device (17) in the position of the outlet module (2) for dispensing a drink, and that the outlet (28) of the brewing unit (27) is arranged with its outlet (29) relative to the outlet module (2) in such a way that the coffee flowing from it runs into a coffee collector (8, 8.1; 38, 38.1) of the outlet module (2) under the effect of gravity, to which collector (8, 8.1; 38, 38.1) the at least one coffee outlet (7; 35, 35.1) is connected.

2. Coffee machine according to claim 1, **characterised in that**, in the position of the outlet module for dispensing a drink, the coupling element is held in a docking manner under tension at the outlet of the foaming device as a consequence of elastic restoring forces of a flexible supply line supporting the coupling element.

3. Coffee machine according to claim 1, **characterised in that** the coupling element (14) is held in a bracket (15) of a component allocated to the outlet module (2), for example of a door (6), and the bracket (15) forms the abutment provided to form the sealed docking of the coupling element (14) on the outlet (16) of the foaming device (17).

4. Coffee machine according to claim 3, **characterised in that** the coupling element (14) in its position (16) docked on the outlet (16) of the foaming device (17) lies under a certain tension on the jacket surface (24) of the outlet (16).

5. Coffee machine according to any one of claims 1 to 4, **characterised in that** the outlet (16) of the foaming device (17) has a docking surface (24) which is longitudinally curved in an S-shape, and borders a outlet channel (22), and the coupling element with its additional docking surface lies against said docking surface in the docked position of the coupling element (14) of the supply line (13).

6. Coffee machine according to claim 5, **characterised in that** the coupling element (14) is made pot-shaped and the docking surface of it is made as a lip-shaped collar (25).

7. Coffee machine according to claim 6, **characterised in that** the material thickness of the collar (25) decreases towards its outer end.

8. Coffee machine according to any one of claims 1 to 7, **characterised in that** the supply line (13) is a silicone hose on which the coupling element (14) is formed.

9. Coffee machine according to claim 8, **characterised in that** the supply line (13) is connected eccentrically to the pot-shaped coupling element (14).

10. Coffee machine according to any one of claims 1 to 9, **characterised in that** the outlet module (2) is part of a door (6) of the housing of the coffee machine (1).

11. Coffee machine according to claim 10, **characterised in that** the door (6) can be moved about a vertical swivel axis from its closed position into its open position and vice versa.

12. Coffee machine according to claim 11, **characterised in that** the door (6) in its closed position which represents the position of the outlet module (2) for dispensing a drink, is held by a closing means, such as a magnet or a locking bolt which closes and opens at a change of pressure.

## Revendications

1. Machine à café avec une unité d'échaudage et au moins un écoulement (7 ; 35, 35.1) afin de verser du café préparé et au moins un second écoulement (7.1 ; 36, 36.1) afin de verser un second composant d'une boisson et avec un dispositif de moussage (17) qui approvisionne au moins le second écoulement (7.1 ; 36, 36.1), les écoulements (7, 7.1 ; 35, 35.1, 36, 36.1) faisant partie d'un module d'écoulement (2) réglable par rapport au dispositif de moussage (17) et à l'unité d'échaudage (27), **caractérisée en ce que** l'au moins un écoulement (7.1 ; 36, 36.1) qui peut être approvisionné par le dispositif de moussage (17) est raccordé à un conduit (13) comprenant un élément de couplage (14) à son extrémité libre afin d'amarrer le conduit (13) à la sortie (16) du dispositif de moussage (17) et l'élément de couplage (14) étant maintenu amarré à la sortie (16) du dispositif de moussage (17) lorsque le module d'écoulement (2) est en position de versage d'une boisson, et **en ce que** l'écoulement (28) de l'unité d'échaudage (27) avec sa sortie (29) est disposé de telle sorte par rapport au module d'écoulement (2) que le café qui s'en écoule s'accumule, sous l'effet de la gravité, dans un collecteur de café (8, 8.1 ; 38, 38.1) du module d'écoulement (2), auquel collecteur (8, 8.1 ; 38, 38.1) est raccordé l'au moins un écoulement (7 ; 35, 35.1) de café.

2. Machine à café selon la revendication 1, **caractérisée en ce que** l'élément de couplage, lorsque le module d'écoulement est en position de versage d'une boisson, est maintenu amarré sous précontrainte à la sortie du dispositif de moussage, à la suite des forces de rappel élastiques d'un conduit flexible supportant l'élément de couplage.

3. Machine à café selon la revendication 1, **caractérisée en ce que** l'élément de couplage (14) est maintenu dans une fixation (15) d'une pièce faisant partie du module d'écoulement (2), par exemple une porte (6) et la fixation (15) forme la butée pour la mise à disposition d'un amarrage étanche de l'élément de couplage (14) sur la sortie (16) du dispositif de moussage (17).

4. Machine à café selon la revendication 3, **caractérisée en ce que** l'élément de couplage (14), dans sa position amarrée à la sortie (16) du dispositif de moussage (17) est en appui debout, avec une certaine précontrainte, sur la surface d'enveloppe (24) de la sortie (16).

5. Machine à café selon l'une des revendications 1 à 4, **caractérisée en ce que** la sortie (16) du dispositif de moussage (17) dispose d'une surface d'amarrage (24) incurvée en forme de S dans sa coupe longitudinale, entourant un canal d'écoulement (22), sur laquelle l'élément de couplage (14) du conduit (13), dans sa position amarrée, est en appui avec sa surface d'amarrage complémentaire.

6. Machine à café selon la revendication 5, **caractérisée en ce que** l'élément de couplage (14) est conçu en forme de cuvette et la surface d'amarrage de ce dernier, en tant que collet (25) en forme de lèvres.

7. Machine à café selon la revendication 6, **caractérisée en ce que** l'épaisseur du matériau du collet (25) diminue vers son extrémité externe.

8. Machine à café selon l'une des revendications 1 à 7, **caractérisée en ce que** le conduit (13) est un flexible en silicone, sur lequel l'élément de couplage (14) est moulé.

9. Machine à café selon la revendication 8, **caractérisée en ce que** le conduit (13) est raccordé de façon excentrée à l'élément de couplage (14) en forme de cuvette.

10. Machine à café selon l'une des revendications 1 à 9, **caractérisée en ce que** le module d'écoulement (2) fait partie d'une porte (6) du châssis de la machine à café (1).

11. Machine à café selon la revendication 10, **caractérisée en ce que** la porte (6) est réglable sur son axe de pivotement vertical, de sa position fermée à sa position ouverte et vice-versa.

12. Machine à café selon la revendication 11, **caractérisée en ce que** la porte (6) dans sa position fermée, qui constitue la position du module d'écoulement (2) pour verser une boisson, est fermée par un moyen de fermeture, un aimant par exemple, ou est un loqueteau ouvrant et fermant par pression.
